# EUROPÄISCHE PATENTSCHRIFT

(11) **EP 0 920 273 B1**
(45) Veröffentlichungstag und Bekanntmachung des Hinweises auf die Patenterteilung: **05.01.2000**
(21) Anmeldenummer: 97934459.5
(22) Anmeldetag: 11.07.1997
(51) Int. Cl.: A47J 29/02

(54) **VORRICHTUNG ZUR ZUBEREITUNG VON HÜHNEREIERN**
DEVICE FOR PREPARATION OF HEN'S EGGS
DISPOSITIF POUR FAIRE CUIRE DES OEUFS DE POULE

(30) Priorität: 15.07.1996 DE 19628468
(43) Veröffentlichungstag der Anmeldung: 09.06.1999
(73) Patentinhaber: Koch, Otto, 82194 Gröbenzell (DE)
(72) Erfinder: Koch, Otto, 82194 Gröbenzell (DE)
(74) Vertreter: von Puttkamer, Nikolaus, Dipl.-Ing. Patentanwälte Haft, von Puttkamer Berngruber, Czybulka
(86) Internationale Anmeldenummer: EP9703705
(87) Internationale Veröffentlichungsnummer: WO9802073

(56) Entgegenhaltungen:
- DE-A- 2 633 630
- DE-A- 2 805 373
- DE-A- 3 123 881
- US-A- 5 589 211

## Beschreibung

Die Erfindung betrifft eine Vorrichtung zur Zubereitung von Hühnereiern.

Die zunehmende Salmonellengefahr und die ISO Norm 9002, sowie das HACCP (das neue europäische Hygiene Gesetz) lassen eine klassische Form der Eierzubereitung (als weiches Frühstücksei) insbesondere in der Hotellerie und Gastronomie wegen der Produkthaftung der Unternehmer nicht mehr zu.

Zur sicheren Abtötung von Salmonellen wird bei der üblichen Zubereitung von Eiern in kochendem Wasser ein wenigstens zwanzigminütiges Kochen der Frühstückseier empfohlen. Nach dieser Behandlung sind die Eier jedoch von ausgesprochen harter Konsistenz, schlecht zu essen, schwer verdaulich und trocken und somit für die Gesundheit wiederum unzuträglich.

Aus der DE-A-31 23 881 ist ein Verfahren der eingangs genannten Art bekannt, bei dem die Beschaffenheit des fertig zubereiteten Eies dadurch positiv beeinflußt werden soll, daß das Garen der Eier bei unterhalb der Siedetemperatur von Wasser liegenden Zubereitungstemperatur durch einen Hauptheizkreis vorgenommen wird. Bei Bedarf sollen anschließend die Eier durch einen Zusatzheizkreis geringerer Wärmeleistung warm gehalten werden.

Abgesehen davon, daß in der genannten Veröffentlichung die Salmonellenproblematik gar nicht erwähnt ist, kann mit dem dort angegebenen Verfahren das erforderliche sichere Abtöten von Salmonellen auch deshalb nicht gewährleistet sein, weil die angewendete Zubereitungstemperatur nur zwischen 65° und 85° C liegt und die anschließende Warmhaltetemperatur mit lediglich über 60° C angegeben ist. Für ein sicheres Abtöten von Salmonellen ist jedoch eine Erwärmung des gesamten Eies, d.h. auch des zentralen Kernbereiches, auf wenigstens 55° bis 80° C für mindestens zehn Minuten erforderlich.

Aus der DE-A-2633630 ist ebenfalls das Zubereiten von Eiern bei unterhalb des Siedepunktes von Wasser liegenden Temperaturen bekannt, sowie eine anschließende servierfähige Warmhaltung. Auch diese Druckschrift befaßt sich in keiner Weise mit der Salmonellengefahr. Nachdem für die Zubereitung lediglich eine oberhalb von 70° C liegende Wassertemperatur sowie eine anschließende Warmhaltetemperatur zwischen 50° und 60° C angegeben ist, kann bei dieser Zubereitungsmethode ebenfalls das vollständige Abtöten der Salmonellen, durch wenigstens zehnminütiges Erreichen der erforderlichen Temperatur insbesondere auch im sich verzögert erwärmenden Kernbereich der Eier nicht gewährleistet sein.

Schließlich geht aus der DE-A-3601406 ein Verfahren zum Kochen von Hühnereiern hervor, bei dem zur Vermeidung einer Infektion mit insbesondere an der Eierschale haftenden Krankheitserregern, der Inhalt der Eier im ungekochten, rohen Zustand in ein verschließbares Behältnis umgefüllt und der Ei-Inhalt in diesem Behältnis gekocht wird, so daß die Eierschale gar nicht mit dem Kochwasser in Berührung kommt. Abgesehen davon, daß bei dieser wenig praktikablen Methode beim Trennen des Ei-Inhalts von der Schale trotzdem Krankheitserreger mit dem Ei-Inhalt in Berührung kommen können, werden auch bereits vorher in der Eisubstanz vorhandene Salmonellen durch den anschließenden üblichen Kochvorgang nicht unschädlich gemacht.

Aus der Druckschrift WO-A-9514388 geht ein Verfahren hervor, bei dem Hühnereier zur salmonellenfreien Zubereitung während einer ersten Zubereitungsphase auf über 90°C erwärmt und danach während eines zweiten Zubereitungsschrittes abgekühlt und auf einer Pasteurisationstemperatur zwischen 55°C und 60°C gehalten werden.

Aus der DE-A-2805373 ist ein Eierkocher bekannt, der einen elektrisch beheizten, mit einem Deckel verschließbaren Kochbehälter aufweist, in dem die Eier durch Wasser oder Wasserdampf gegart werden. Nach Ablauf der Kochzeit werden die Eier mit kaltem Wasser abgeschreckt, das einen oberhalb des Kochbehälters befindlichen Wasserbehälter entnommen wird und den Kochbehälter nach dem Abschrecken durch einen Ablauf verläßt. Eine salmonellenfreie Zubereitung spielt hierbei keine Rolle.

Der Erfindung liegt deshalb die Aufgabe zugrunde, eine Vorrichtung zur Zubereitung von Hühnereiern anzugeben, die unter Vermeidung der erwähnten Nachteile des oben angegebenen Standes der Technik als Ergebnis mit Sicherheit salmonellenfreie fertig zubereitete Eier gewährleistet. Die Eier sollen zudem wie vom Verbraucher insbesondere für Frühstückseier gewünscht, folgende Konsistenz aufweisen: mit ausreichend festen, jedoch nicht hartem Eiweißrand und einem innen noch weichen Eigelb, so daß eine ausgezeichnete Verträglichkeit garantiert werden kann und der Genuß dem von herkömmlich zubereiteten Frühstückseiern entspricht.

Diese Aufgabe wird durch eine Vorrichtung mit den Merkmalen des Patentanspruchs 1 gelöst.

Ein besonderer Vorteil der Erfindung ist dadurch gegeben, daß die Eier bei weiterer Aufbewahrung mit der Temperatur des zweiten Zubereitungsabschnitts ihre beschriebene Konsistenz beibehalten, ohne daß eine Nachhärtung erfolgt. Die Eier können somit auch im Kessel aufbewahrt und für mehrere Stunden servierfähig warmgehalten werden, was vor allem in der Hotellerie und Gastronomie von Bedeutung ist. Vorteilhafterweise wird der Dekkel des Eierkochbehälters erst dann geöffnet, wenn eine Salmonellenabtötung sicher erfolgt ist, so daß die Eier nicht vorher entnommen werden können.

Vorteilhafte Ausgestaltungen der erfindungsgemäßen Vorrichtung sind Gegenstand der abhängigen Patentansprüche 2 bis 13.

Im folgenden wird ein Ausführungsbeispiel der Erfindung anhand einer schematischen Zeichnung näher erläutert.

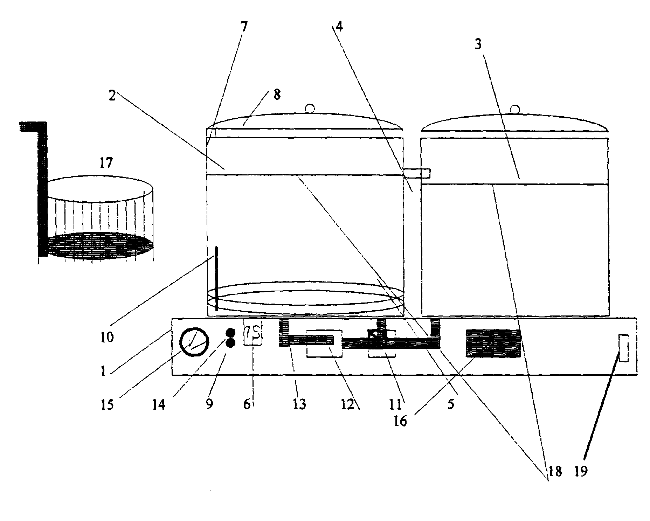

Der in der Figur dargestellte Eierkocher hat einen Gehäusesokkel, im folgenden als Konsole 1 bezeichnet, auf dem ein Eierkochbehälter 2 und ein Reservewasserbehälter 3 aufgebracht sind. Beide Behälter 2, 3 sind vorzugsweise als CN-Töpfe ausgeführt und in einer Höhe von ca. 15 cm über ein als Wasserüberlauf wirkendes Rohr 4 miteinander verbunden. Der Eierkochbehälter 2 ist mit schematisch dargestellten Heizspiralen 5 für eine thermostatgeregelte dreistufige Kesselheizung von mindestens 2000 Watt sowie mit einem Temperaturfühler 10 für eine in der Konsole 1 integrierte digitale Temperaturanzeige 5 ausgestattet. Ferner ist der Eierkochbehälter 2 mit einem über eine eigene vorzugsweise elektromagnetische Verriegelungseinrichtung 7 verschließbaren Deckel 8 versehen.

Die Konsole 1 weist eine optisch wirkende, z.B. eine grüne und rote Anzeigelampe, und/oder eine akustisch wirkende Signalisierungseinrichtung 9, z.B. eine Klingel, auf, durch die die Verzehrfertigkeit der Eier signalisiert wird. Die Signalisierungseinrichtung 9 steht hierbei derart in Wirkverbindung mit der Verriegelungseinrichtung 7 des Deckels 8, daß gleichzeitig mit der Anzeige der Verzehrfertigkeit eine Freigabe der Verriegelungseinrichtung 7 erfolgt. Dadurch wird sichergestellt, daß vor Beendigung des Kochprozesses der Deckel 8 nicht unbefugt geöffnet werden kann, so daß es nach dem Beginn des Kochvorganges nicht mehr möglich ist, nachträglich weitere Eier in den Behälter 2 einzufügen. Bei nachträglich bzw. verspätet eingelegten Eiern wäre nämlich eine vollständige Abtötung von Salmonellen nicht mehr gewährleistet. Gleichzeitig wird eine unzulässige, vorzeitige Entnahme von noch nicht fertig zubereiteten und somit nicht sicher salmonellenfreien Eiern verhindert.

Zum Bestücken des Eierkochbehälters 2 mit den Eiern ist ein neben dem Eierkocher dargestellter, in den Behälter 2 einsetzbarer Drahtkorb 17 vorgesehen, der ein Unterteil und ein Seitenteil aus Drahtgeflecht und einen aus dem Kochgerät herausreichenden Griff aufweist. Der ebenfalls mit einem Deckel versehene Reservewasserbehälter 3 für Kaltwasser steht über den ersten Weg eines in der Konsole 1 eingebauten 3/2-Wegeventils 11 und eine Pumpe 12 sowie über eine Rohrleitung 13 mit dem Eierkochbehälter 2 in Verbindung. Für die erforderliche Umwälzung des Garwassers im Behälter 2 ist der dem Behälter 3 zugewandte Eingang der Pumpe 12 über den zweiten Weg des Ventils 11 wiederum mit dem Behälter 2 verbunden, so daß die Pumpe 12 in Abhängigkeit von der Stellung des Ventils 11 entweder den Transport von Kaltwasser aus dem Behälter 3 in den Behälter 2 oder die Umwälzung des Garwassers im Behälter 2 bewirkt.

Es ist auch möglich, anstelle der dargestellten Anordnung mit einer Pumpe und einem 3/2-Wegeventil zwei separate Pumpen anzuwenden, von denen die eine Pumpe für den Transport des Kaltwassers in den Eierkochbehälter 2 und die andere Pumpe nur für die Umwälzung des Garwassers in dem Eierkochbehälter 2 sorgt.

Für die Umwälzung des Garwassers kann alternativ oder zusätzlich auch eine gesonderte Rührvorrichtung vorgesehen sein.

Zur Regelung der Länge der beiden Zubereitungsabschnitte, insbesondere der Garzeiten in Abhängigkeit von der Eiergröße ist in der Konsole ein Schalter 15 vorgesehen, an dem die Eiergröße einstellbar ist. Weiterhin beinhaltet die Konsole 1 ein das Temperatursignal des Temperaturfühlers 10 im Behälter 2 verarbeitendes, schematisch dargestelltes Steuerelement 16, das den gesamten Ablauf des Heizvorganges und auch die Wasserkreisläufe über das Ventil 11 steuert.

Zu Beginn des Kochvorganges sind Eierkochbehälter 2 und Reservewasserbehälter 3 mit der vorgeschriebenen Menge Wasser zu füllen. Die gewünschte Menge Eier wird in den dafür vorgesehenen Korb 17 gelegt und dieser in den Eierkochbehälter 2 gestellt. Die Eier verdrängen dann Wasser aus dem Behälter 2 über den Überlauf 4 in den Behälter 3 im Verhältnis ihrer Masse. Dadurch wird vorteilhafterweise erreicht, daß die zugeführte Energiemenge unabhängig von der Eiermenge stets gleich bleibt. Am Schalter 15 der Konsole ist sodann die Eiergröße einzustellen, z.B. Stufe 2 für Eier der Größe 2. Hierdurch wird der über das Steuerelement 16 vollautomatisch ablaufende Kochprozeß gestartet, wobei die Heizung 5 eingeschaltet und die immer mitlaufende Pumpe 12 in Bewegung gesetzt wird. Die Pumpe 12 sorgt durch Verwirbelung des Wassers ständig dafür, daß beim Erhitzen und bei der anschließenden Temperaturhaltung des Wassers überall im Kochbehälter 2 die gleiche Temperatur herrscht. Zu Beginn des Kochprozesses leuchtet ferner die rote Lampe der Signalisierungseinrichtung 9, um anzuzeigen, daß der Kochvorgang noch nicht beendet ist. Gleichzeitig wird die Verriegelungseinrichtung 7 des Deckels 8 aktiviert, so daß weder nachträglich weitere Eier hinzugefügt oder vorzeitig Eier entnommen werden können.

Bei Erreichen einer Wassertemperatur von ca. 55° C, bei der das Garen der Eier beginnt, schaltet sich, gesteuert durch das Temperatursignal des Temperaturfühlers, eine mit dem Schalter 15 für die Eiergröße in Verbindung stehende Uhr ein, die nach dem Erreichen der erforderlichen Wassertemperatur von 90° - 95° C (bei der die Heizenergiezufuhr so gedrosselt wird, daß diese Temperatur gehalten wird) in Abhängigkeit von der Eiergröße eine bestimmte erste Zeitdauer läuft, beispielsweise 5,5 Minuten für Eier der Klasse 2. Während des gesamten Erwärmungs- und Temperaturhaltungsvorgangs wälzt die Pumpe 12 ständig das Wasser im Behälter 2 um und hält dieses so in Bewegung. Hierfür ist das Ventil 11 so geschaltet, daß das Wasser von Behälter 3 nicht in den Behälter 2 gelangen kann.

Nach Beendigung des hinsichtlich der Dauer eiergrößenabhängigen Temperaturhaltungsvorganges - im vorliegenden Fall nach 5,5 Minuten (erste Zeitdauer) - wird die Heizung abgeschaltet. Gleichzeitig wird das Ventil 11 so geschaltet, daß die Pumpe 12 nunmehr Kaltwasser aus dem Reservewasserbehälter 3 in den Kochbehälter 2 fördert, bis dort eine Mischtemperatur von 80° C bis 55° C, vorzugsweise von 60°C ± 2° C, erreicht wird. Der durch das Einpumpen von Kaltwasser im Kochbehälter 2 entstehende Wasserüberschuß fließt dabei durch den Wasserüberlauf 4 in den Reservewasserbehälter 3 zurück.

Anschließend wird das Ventil 11 wieder so geschaltet, daß die Pumpe das Garwasser im Behälter 2 umwälzt. Hierbei wird fortlaufend die Wassertemperatur (60° C +/- 2° C) kontrolliert. Bei Absinken unter 58° C schaltet der Thermostat ein und die Heizstäbe 5 erwärmen das Wasser wieder auf 60° 0. Die Eier werden ab dem Zeitpunkt, an dem die Mischtemperatur von 60° C erreicht wird, weiter eine zweite Zeitdauer lang, vorzugsweise 10 Minuten gegart. Dann sind die Eier verzehrfertig. Gleichzeitig läutet die Klingel und die Signalisierungseinrichtung 9 schaltet vom roten auf ein grünes Signallicht 14 um. Zeitgleich wird auch die Verriegelungseinrichtung 7 des Deckels 8 freigegeben, so daß die fertigen Eier entnommen werden können.

Die Eier sind jetzt außen ausreichend fest und innen noch weich und zudem mit Sicherheit salmonellenfrei. Die Eier können nunmehr bei Bedarf bedenkenlos im Kochbehälter 2 bei der konstanten Wassertemperatur von 60° C weiter aufbewahrt werden, ohne daß sich deren Konsistenz in den nächsten Stunden merkbar ändert, was ein wesentlicher Vorteil insbesondere bei der Hotellierie und Gastronomie ist, weil sie so stets servierfähig und sofort verzehrbar sind.

Die Erfindung ist auch für luftdicht im Vakuum arbeitende Wärmeautomaten anwendbar, z.B. für die Zubereitung von Rühreiern (in einem warmen Spender, oder Vakuum vorbereitet im Beutel und nur im Wasserbad bei 60° regeneriert)

### Bezugszeichenliste

- 1: Konsole
- 2: Ejerkochbehälter
- 3: Reservewasserbehälter
- 4: Wasserüberlauf
- 5: Heizspiralen
- 6: Temperaturanzeige
- 7: Verriegelungseinrichtung
- 8: Deckel
- 9: Signalisierungseinrichtung
- 10: Temperaturfühler, Thermostat
- 11: Ventil
- 12: Wasserpumpe
- 13: Rohrleitung
- 14: Grünes Signallicht
- 15: Eiergrößen/Startschalter
- 16: Steuerelement
- 17: Drahtkorb
- 18: Wasserspiegel

## Patentansprüche

1. Vorrichtung zur Zubereitung von Hühnereiern, bei der die Eier in einen, ein flüssiges Wärmezuführungsmedium, vorzugsweise Wasser, enthaltenden Garraum eines Eierkochbehälters (2) gebracht werden, wobei die Zubereitungstemperatur während eines ersten Zubereitungsabschnitts während einer ersten Zeitdauer unter der Siedetemperatur des Wassers liegt, und während eines folgenden zweiten Zubereitungsabschnitts während einer zweiten Zeitdauer unter der Temperatur des ersten Zubereitungsabschnitts auf einer Endtemperatur festgehalten wird, dadurch gekennzeichnet, daß der Eierkochbehälter (2) ein heizbarer, thermostatgeregelter Behälter für die Aufnahme des Garwassers und der Eier ist, der über einen Wasserüberlauf (4) mit einem Reservewasserbehälter (3) für Kaltwasser in Verbindung steht, und daß eine Pumpe (12) vorgesehen ist, die nach Erwärmung des Garwassers bis wenigstens 90° C während des ersten Zubereitungsabschnitts und nach Ablauf der ersten Zeitdauer über ein Ventil (11) kontinuierlich so viel Kaltwasser aus dem Reservewasserbehälter (3) in den Eierkochbehälter (2) fördert, daß sich in diesem die Endtemperatur ergibt.

2. Vorrichtung nach Anspruch 1, dadurch gekennzeichnet, daß eine Umwälzung des Garwassers des Eierkochbehälters (2) mittels der Pumpe (12) über das Ventil (11) vorgesehen ist.

3. Vorrichtung nach Anspruch 1 oder 2, dadurch gekennzeichnet, daß eine Rührvorrichtung zur Umwälzung des Garwassers vorgesehen ist.

4. Vorrichtung nach einem der Ansprüche 1 bis 3, dadurch gekennzeichnet, daß der Eierkochbehälter (2) mit einem Temperaturfühler (10) und einem Thermostat ausgestattet ist.

5. Vorrichtung nach einem der Ansprüche 1 bis 4, gekennzeichnet durch eine Signalisierungseinrichtung (9) zur Anzeige des Ablaufes der zweiten Zeitdauer.

6. Vorrichtung nach einem der Ansprüche 1 bis 5, dadurch gekennzeichnet, daß ein Schalter (15) zur Regelung der Länge der ersten Zeitdauer in Abhängigkeit von der Eiergröße vorgesehen ist.

7. Vorrichtung nach Anspruch 5 oder 6, dadurch gekennzeichnet, daß der Eierkochbehälter (2) mit einem verschließbaren Deckel (8) versehen ist, der eine Verriegelungseinrichtung (7) aufweist, die durch die Signalisierungseinrichtung (9) bei Erreichen der Endtemperatur und nach Ablauf der zweiten Zeitdauer automatisch freigebbar ist.

8. Vorrichtung nach einem der Ansprüche 1 bis 7, dadurch gekennzeichnet, daß für eine kontinuierliche Eierzubereitung ein zweiter, mit dem Reservewasserbehälter(3) in Verbindung stehender Eierkochbehälter (2) vorgesehen ist.

9. Vorrichtung nach einem der Ansprüche 1 bis 8, dadurch gekennzeichnet, daß während des ersten Zubereitungsabschnittes eine Wassertemperatur von wenigstens 90°C, ausgehend von einer Ausgangstemperatur von ca. 55°C erreicht wird.

10. Vorrichtung nach Anspruch 9, dadurch gekennzeichnet, daß die Wassertemperatur 95°C beträgt.

11. Vorrichtung nach Anspruch 1 bis 10, dadurch gekennzeichnet, daß die Endtemperatur 58°C bis 62°C beträgt.

12. Vorrichtung nach einem der Ansprüche 1 bis 11, dadurch gekennzeichnet, daß die Endtemperatur 60°C ± 2°C beträgt.

13. Vorrichtung nach einem der Ansprüche 1 bis 12, dadurch gekennzeichnet, daß die zweite Zeitdauer wenigstens etwa 10 Minuten beträgt.

## Claims

1. A device for the preparation of hens' eggs, in which the eggs are brought into a cooking chamber of an egg cooking tank (2) containing a liquid heat supply medium, preferably water, wherein the preparation temperature during a first preparation phase during a first period of time lies beneath the boiling temperature of the water, and during a following second preparation phase during a second period of time is kept beneath the temperature of the first preparation phase at a final temperature,
**characterised in that** the egg cooking tank(2) is a heatable, thermostatically controlled container for containing the cooking water and the eggs, which communicates via a water overflow (4) with a reserve water tank (3) for cold water,
**and in that** a pump (12) is provided, which after heating the cooking water up to at least 90 °C during the first preparation phase and after the end of the first period of time via a valve (11) continuously delivers cold water from the reserve water tank (3) into the egg cooking tank (2) in such a quantity that the final temperature is produced therein.

2. A device according to Claim 1,
**characterised in that** a circulation of the cooking water of the egg cooking tank (2) is provided by means of the pump (12) via the valve (11).

3. A device according to Claim 1 or 2,
**characterised in that** a stirring device is provided for circulating the cooking water.

4. A device according to one of Claims 1 to 3,
**characterised in that** the egg cooking tank (2) is equipped with a temperature sensor (10) and a thermostat.

5. A device according to one of Claims 1 to 4,
**characterised by** a signalling device (9) for indicating the course of the second period of time.

6. A device according to one of Claims 1 to 5,
**characterised in that** a switch (15) is provided for regulating the length of the first period of time in dependence on the size of the egg.

7. A device according to Claim 5 or 6,
**characterised in that** the egg cooking tank (2) is provided with a sealable lid (8) comprising a locking mechanism (7) which can be automatically released by the signalling device (9) upon reaching the final temperature and after the end of the second period of time.

8. A device according to one of Claims 1 to 7,
**characterised in that** a second egg cooking tank (2) communicating with the reserve water tank (3) is provided for a continuous egg preparation.

9. A device according to one of Claims 1 to 8,
**characterised in that** during the first preparation phase a water temperature of at least 90 °C is reached, assuming an initial temperature of approx. 55 °C.

10. A device according to Claim 9,
**characterised in that** the water temperature is 95°C.

11. A device according to Claim 1 to 10,
**characterised in that** the final temperature is 58 °C to 62 °C.

12. A device according to one of Claims 1 to 11,
**characterised in that** the final temperature is 60 °C ± 2 °C.

13. A device according to one of Claims 1 to 12,
**characterised in that** the second period of time is at least roughly 10 minutes.

## Revendications

1. Dispositif pour la préparation d'oeufs de poule, dans lequel les oeufs sont placés dans une enceinte de cuisson contenant un milieu caloporteur liquide, de préférence de l'eau, d'un récipient à cuire les oeufs (2), la température de préparation, pendant une première phase de préparation, pendant un premier temps de préparation, étant inférieure à la température d'ébullition de l'eau et, pendant une deuxième phase de préparation consécutive, pendant un deuxième temps de préparation, étant maintenue à une température finale inférieure à la température de la première phase de préparation, caractérisé par le fait que le récipient à cuire les oeufs (2) est un récipient chauffé, avec régulation thermostatique, destiné à recevoir l'eau de cuisson et les oeufs, qui communique avec un récipient de réserve d'eau (3) contenant de l'eau froide par l'intermédiaire d'un conduit à débordement (4) et par le fait qu'il est prévu une pompe (12) qui, après chauffage de l'eau de cuisson jusqu'à 90 °C au moins pendant la première phase de préparation et une fois le premier temps de préparation écoulé transporte en continu, à travers une valve (11), de l'eau froide du récipient de réserve d'eau (3) vers le récipient à cuire les oeufs (2), jusqu'à obtention de la température finale dans celui-ci.

2. Dispositif selon revendication 1, caractérisé par le fait qu'il est prévu une mise en mouvement de l'eau de cuisson du récipient à cuire les oeufs (2), à l'aide de la pompe (12), à travers la valve (11).

3. Dispositif selon revendication 1 ou 2, caractérisé par le fait qu'il est prévu un dispositif d'agitation pour la mise en mouvement de l'eau de cuisson.

4. Dispositif selon une des revendications 1 à 3, caractérisé par le fait que le récipient à cuire les oeufs (2) est équipé d'un capteur de température (10) et d'un thermostat.

5. Dispositif selon une des revendications 1 à 4, caractérisé par un dispositif indicateur (9) pour la visualisation du déroulement du deuxième temps de préparation.

6. Dispositif selon une des revendications 1 à 5, caractérisé par qu'il est prévu un commutateur (15) pour le réglage de la durée du premier temps de préparation en fonction de la taille des oeufs.

7. Dispositif selon revendication 5 ou 6, caractérisé par le fait que le récipient à cuire les oeufs (2) est équipé d'un couvercle (8) qui comporte un dispositif de verrouillage (7) qui peut être libéré automatiquement par le dispositif indicateur lorsque la température finale est atteinte et après écoulement du deuxième intervalle de temps.

8. Dispositif selon une des revendications 1 à 7, caractérisé par le fait qu'il est prévu, pour une préparation en continu des oeufs un second récipient à cuire les oeufs (2), qui communique avec le récipient de réserve d'eau (3).

9. Dispositif selon une des revendications 1 à 8, caractérisé par le fait que pendant la première phase de préparation, on atteint une température d'eau d'au moins 90 °C, en partant d'une température de départ d'environ 55 °C.

10. Dispositif selon la revendication 9, caractérisé par le fait que la température de l'eau est de 95 °C.

11. Dispositif selon une des revendications 1 à 10, caractérisé par le fait que la température finale est comprise entre 58 °C et 62 °C.

12. Dispositif selon une des revendications 1 à 11, caractérisé par le fait que la température finale est de 60 °C ± 2 °C.

13. Dispositif selon une des revendications 1 à 12, caractérisé par le fait que le deuxième temps de préparation est au moins d'environ 10 minutes.
